# EUROPEAN PATENT APPLICATION

(11) **EP 2 404 533 A1**
(43) Date of publication of application: **11.01.2012**
(21) Application number: 10015046.5
(22) Date of filing: 26.11.2010
(51) Int. Cl.: A47J 31/06

(54) **Receptacle device for holding coffee capsule**

(30) Priority: 22.06.2010 KR 20201006590 U
(71) Applicant: Convex Korea Co., Ltd., Wollong-myeon Paju-si, Gyeonggi-do 413-811 (KR)
(72) Inventor: Jung, Woo-Young, Paju-si Gyeonggi-do 413-811 (KR)
(74) Representative: Hager, Thomas Johannes

(57) **Abstract**

A receptacle device for holding a coffee capsule includes a holder unit and a grip unit. The holder unit includes: a housing portion of which an opened upper portion is closely attached and fixed to a jetting unit of an espresso machine such that hot water is forced to the inside from the jetting unit and that is formed in a cylindrical shape to house the coffee capsule such that an outer circumferential surface of the coffee capsule is closely attached to an inner circumferential surface thereof; and a through-hole that is formed through the bottom surface of the housing portion such that the coffee mixed through the coffee capsule from the jetting unit is discharged downward. The grip unit supports and fixes the holder unit such that the opened upper portion of the holder unit is closely attached and connected to the jetting unit of the coffee maker.

## Description

### CROSS-REFERENCE TO RELATED APPLICATIONS

The present application claims priority of Korean Utility Model Application No. 20-2010-0006590, filed on June 22, 2010, which is incorporated herein by reference in its entirety.

### BACKGROUND OF THE INVENTION

### Field of the Invention

The present invention relates to a receptacle device for using in an espresso machine for brewing coffee by forcing very hot water into a coffee. More particularly, the present invention relates to a receptacle device for holding a coffee capsule in an espresso machine, wherein the receptacle may hold various kinds of coffee capsules by improving structure of a holder unit and a grip unit.

### Description of Related Art

In general, espresso coffee is a concentrated coffee beverage brewed by forcing very hot (but not boiling) water under high pressure through coffee that has been ground to a consistency between extremely fine and powder. First, a desired amount of coffee powder is taken out of a coffee container and then added to a general metal filter, and then hot water is forced into the coffee powder so as to brew the coffee.

Once a coffee container is opened, coffee contained in the coffee container does not maintain the aroma for a long time. Therefore, a single-use coffee capsule which is sealed after putting coffee powder inside has been recently developed. The coffee capsule may be mounted on an espresso machine so as to brew espresso coffee. However, each kind of coffee capsule has unique structure according to the manufacturer. Therefore, each espresso machine is uniquely designed for each coffee capsule manufacturer. Accordingly, a consumer who purchases an espresso machine cannot use coffee capsules of other manufacturers.

### SUMMARY OF THE INVENTION

The present invention is directed to a receptacle device for holding a coffee capsule in an espresso machine, wherein the receptacle may hold various kinds of coffee capsules by improving structure of a holder unit and a grip unit.

In accordance with an embodiment of the present invention, a receptacle device is applied to an espresso machine having a jetting unit for forcing hot water into the coffee capsule containing coffee powder to brew coffee. The receptacle includes a holder unit and a grip unit.

The holder unit includes: a housing portion of which an opened upper portion is closely attached and fixed to the jetting unit such that the hot water is forced inside from the jetting unit and that is formed in a cylindrical shape to house the coffee capsule such that an outer circumferential surface of the coffee capsule is closely attached to an inner circumferential surface thereof; a through-hole that is formed through the bottom surface of the housing portion such that the coffee mixed through the coffee capsule from the jetting unit is discharged downward; a first filter that is closely attached and fixed to the bottom surface of the housing portion and communicates with the through-hole of the housing portion to filter the coffee mixed with the hot water introduced from the jetting unit through the coffee capsule; and a filter support ring that is closely attached and fixed to an upper surface of the first filter and has a boring needle formed to bore a hole through a lower end surface of the coffee capsule, the boring needle facing upward.

The grip unit supports and fixes the holder unit such that the opened upper portion of the holder unit is closely attached and connected to the jetting unit of the coffee maker.

### BRIEF DESCRIPTION OF THE DRAWINGS

FIG. 1 is a side view of an espresso machine including a receptacle for a coffee capsule according to an embodiment of the present invention.

FIG. 2 is a side cross-sectional view of the receptacle according to the embodiment of the present invention.

FIG. 3 is an exploded perspective view of a holder unit of the receptacle according to the embodiment of the present invention.

FIG. 4 is a side cross-sectional view of the holder unit of the receptacle according to the embodiment of the present invention.

FIG. 5 is an exploded perspective view of a holder unit of a receptacle according to another embodiment of the present invention.

FIG. 6 is a side cross-sectional view of the holder unit of the receptacle according to the embodiment of the present invention.

### DESCRIPTION OF SPECIFIC EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

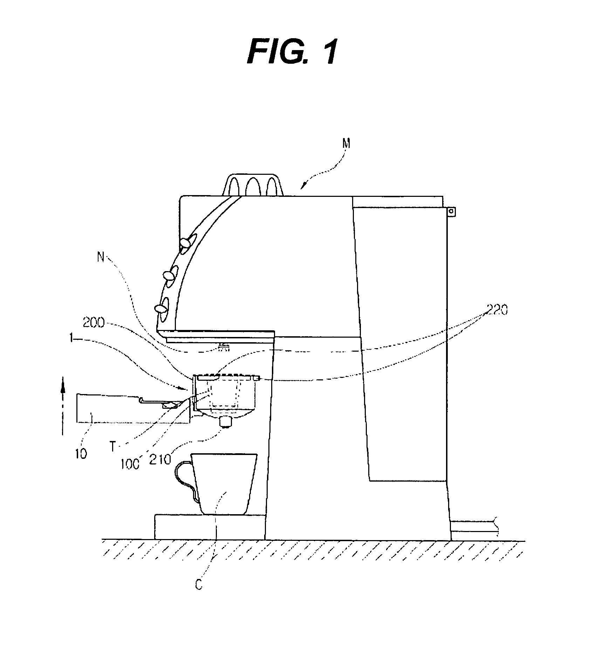

Referring to FIGS. 1 to 3, a receptacle for a coffee capsule according to an embodiment of the present invention will be described. An espresso machine includes a jetting unit for forcing hot water downward into a coffee capsule containing coffee powder to brew coffee. The receptacle according to the embodiment of the present invention includes a holder unit 100 and a grip unit 200. The holder unit 100 includes a housing portion 110 and a through-hole 111. The housing portion 110 has an opened upper portion which is closely attached and fixed to the jetting unit N of the espresso machine M such that the hot water is forced into the housing unit 110 from the jetting unit N of the espresso machine M, and is formed in a cylindrical shape to house the coffee capsule such that the outer circumferential surface of the coffee capsule T is closely attached to the inner circumferential surface of the housing unit 110. The through-hole 111 is formed through the bottom surface of the housing unit 110 such that coffee mixed through the coffee capsule T from the jetting unit N of the espresso machine M is discharged downward. The grip unit 200 supports and fixes the holder unit 100 such that the opened upper portion of the holder unit 100 is closely attached and connected to the jetting unit N of the espresso machine M.

When a user holds a handle 10 of the grip unit 200 and rotates the grip unit 200 in a state in which an upper end portion of the grip unit 200 is closely attached to the jetting unit N of the espresso machine M, the grip unit 200 is attached or detached, while a plurality of protrusion ribs 220 formed on the outer circumferential surface of the upper end portion of the grip unit 200 are rotated into or from guide grooves (not illustrated) which are connection portions formed in the espresso machine M. The grip unit 200 is not limited to such a structure that is attached or detached, but may be formed in the espresso machine M such that the holder unit 100 may be inserted into the grip unit 200.

The holder unit 100 is received in the grip unit 200, and the coffee capsule T is received in the holder unit 100 of the receptacle 1. Then, when the receptacle 1 is rotated about the espresso machine M and connected to the espresso machine M such that watertightness is maintained, the jetting unit N is ready to force hot water into the coffee capsule T.

The hot water is forced into the coffee capsule, and mixed with the coffee powder contained in the coffee capsule T. Then, the mixed coffee is discharged downward through the through-hole 111 of the holder unit 100 and a discharge hole 210 of the grip unit 200. The discharged coffee drips into a cup C placed on the bottom surface of the espresso machine M.

Referring to FIGS. 1 to 3, the holder unit 100 includes a first filter 115 and a filter support ring 113. The first filter 115 is closely attached and fixed to the bottom surface of the housing portion 110 and communicates with the through-hole 111 of the housing portion 111, in order to filter the coffee which is mixed with the hot water introduced from the jetting unit N of the espresso machine M through the coffee capsule T. The filter support ring 113 is closely attached and fixed to the upper surface of the first filter 115 and has a boring needle 113a for boring a hole through the upper surface of the coffee capsule T. The boring needle 113a is formed to face upward.

When the receptacle 1 is connected while rotated from the lower side of the espresso machine M, the boring needle 113a disposed in the lower side of the housing portion 110 serving as the body of the holder unit 100 bores a hole through the lower surface of the coffee capsule T inserted into the housing portion 110. Then, the coffee mixed in the coffee capsule T is discharged through the hole bored by the boring need 113a and drips downward while sequentially passing through the through-hole 111 of the holder unit 100 and the discharge hole 210 of the grip unit 200.

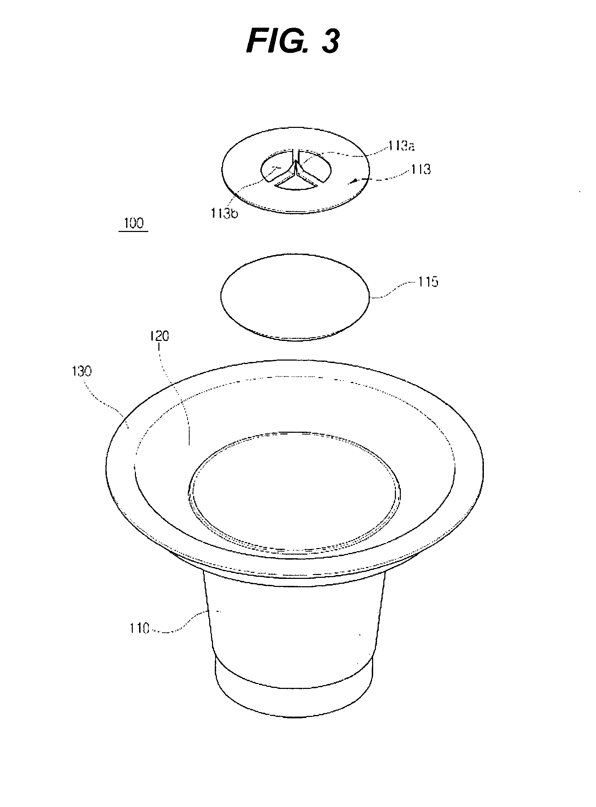

Referring to FIG. 3, the filter support ring 113 includes holes 113b through which the coffee discharged from the coffee capsule T through the hole bored by the boring needle 113a passes.

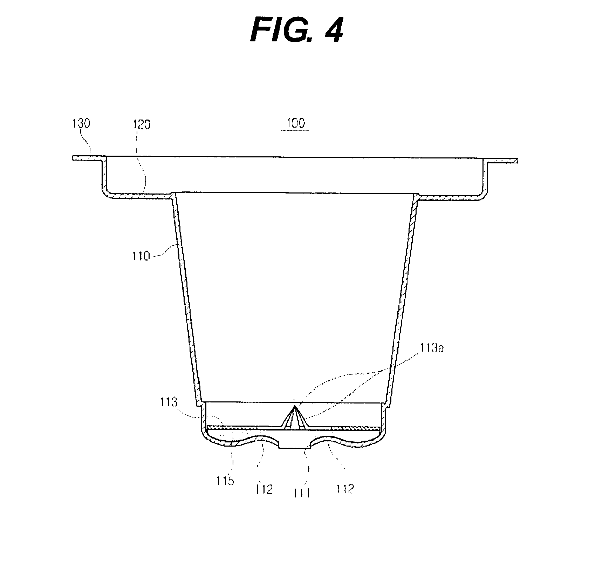

Referring to FIG. 4, the housing portion 110 may be formed in a tapered cylindrical shape of which the diameter decreases toward the bottom. The structure of the housing portion 110 reflects the shape of the coffee capsule T. When the outer circumferential surface of the coffee capsule T and the inner circumferential surface of the housing portion 110 are closely attached to each other, the hot water which is forced into the coffee capsule T may be smoothly mixed.

The housing portion 110 includes a donut-shaped downward bent portion 112 formed at a position corresponding to a predetermined distance from the through-hole 111 formed in the center of the housing portion 110. The downward bent portion 112 has a cross-section formed in a half-moon shape, and the lower surface of the first filter 115 is closely attached to the downward bent portion 112 in correspondence to the shape of the downward bent portion 112.

Since the first filter 115 is closely attached to the downward bent portion 112 formed in the lower end surface of the housing portion 110, the first filter 115 is prevented from slipping off the bottom surface of the housing portion 110 into a side direction, and the centering of the first filter 115 and the housing portion 110 with respect to the through hole 111 is maintained. Therefore, after the coffee is filtered through the first filter 115, the coffee is smoothly discharged through the through-hole 111 of the housing portion 100.

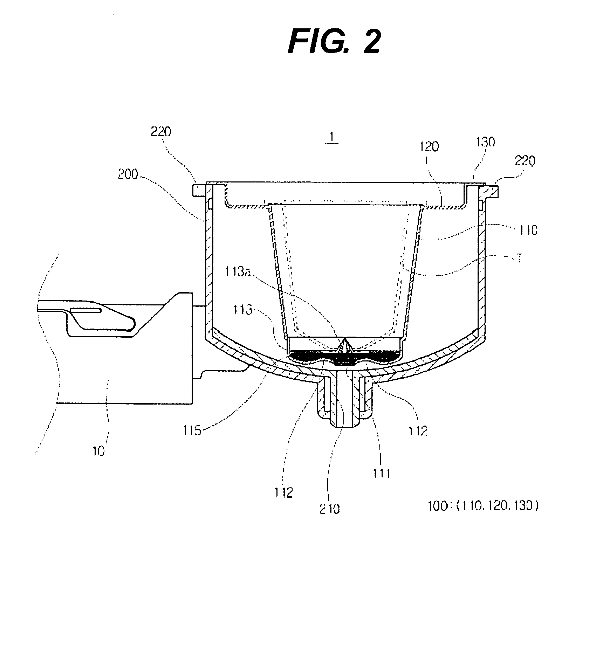

Referring to FIGS. 1 and 2, the grip unit 200 includes a cylindrical body, a plurality of protrusion ribs 220, and a discharge hole 210. The cylindrical body has an opened upper portion through which the holder unit 100 is inserted into the grip unit 200 from upward. The plurality of protrusion ribs 220 are formed on the outer circumferential surface of the opened upper portion of the cylindrical body and attached to or detached from the connection portions of the espresso machine M, which are formed adjacent to the jetting portion N, while the grip unit 200 is rotated from downward. The discharge hole 210 is formed in the center of the bottom surface of the cylindrical body and induces the coffee discharged from the coffee capsule T downward.

Referring to FIGS. 2 to 4, the holder unit 100, of which the upper end portion is closely attached and connected to the opened upper portion of the grip unit 200, includes a first stepped portion 120 and a second stepped portion 130. The first stepped portion 120 is formed by bending an upper extended portion of the housing portion 110 in the side direction, and the second stepped portion 130 is formed by bending the edge portion of the first stepped portion 130 in the upward direction and then bending the bent portion in the side direction.

As described above, the holder unit 100 includes the first and second stepped portions 120 and 130 bent in two stages. Accordingly, the grip unit 200 may be formed in such a manner that the inner diameter thereof is set to be sufficiently larger than the inner diameter of the holder unit 100. As a result, the inner diameter of the housing portion 110 serving as the body of the holder unit 100, in which the coffee capsule T is housed, may be adjusted compatibly.

In this case, in order to form the holder unit 100 which may be conveniently attached to and detached from the grip unit 200 in a state in which the inner diameter of the housing portion 110 is set to be smaller than the inner diameter of the grip unit 200, the first and second stepped portions 120 and 130 bent in two stages are formed at the upper end portion of the holder unit 100, which is the extended portion of the housing portion 110. The holder unit 100 is detachably connected and fixed to the grip unit 200 in a state in which the second stepped portion 130 is received on the opened upper end portion of the grip unit 200.

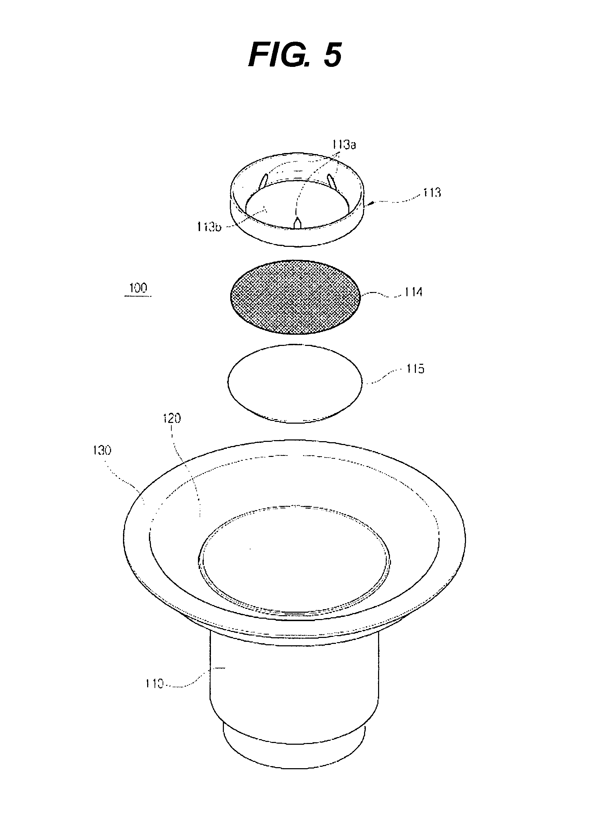

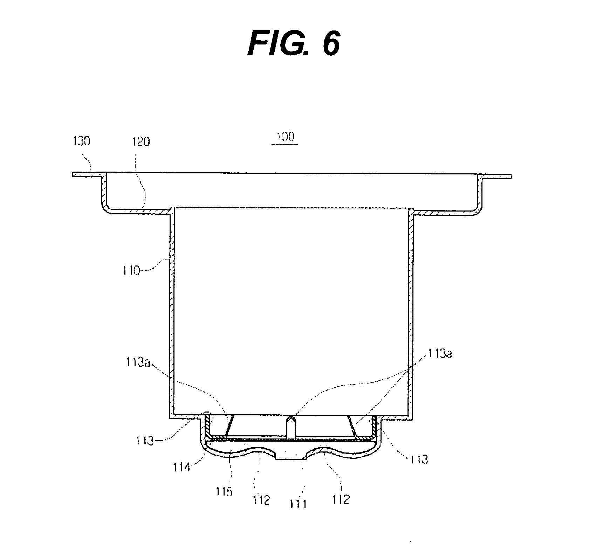

FIG. 5 is an exploded perspective view of a holder unit according to another embodiment of the present invention, and FIG. 6 is a side cross-sectional view of the holder unit of FIG. 5. The holder unit according to the embodiment of the present invention may include a mesh-type second filter 114 formed at a lower side of a filter support ring 113 corresponding to an open hole 113b. The second filter 114 serves to primarily filter foreign matters mixed in coffee.

Mixed coffee is discharged through holes bored in the lower end portion of a coffee capsule T by boring needles 113b, primarily filtered through the second filter 114 disposed in the lower portion of the housing portion 110, and then discharged through the through-hole 210 of the holder unit 200 communicating with the first filter 115.

In such a structure, since foreign matters mixed in the coffee are primarily filtered before the coffee discharged from the coffee capsule T reaches the first filter 115, the amount of coffee filtered by the first filter 115 decreases. Therefore, the lifetime of the first filter 115, that is, the durability of the first filter 115 is improved. The mesh-type second filter 114 filters foreign matters of which the sizes are relatively large in comparison with those of particles filtered by the first filter 115. Therefore, it is convenient to clean the second filter 114. That is, after the coffee capsule T housed in the holder unit 100 is removed, the holder unit 100 may be put into a container containing water and then stirred to remove the foreign matters filtered by the second filter 114.

The housing portion 110 may be formed in a cylindrical shape of which the upper and lower portions have the same diameter. Therefore, the shape and inner diameter of the housing portion 110 may be compatibly changed with respect to the inner diameter of the grip unit 200 which is sufficiently larger than the inner diameter of the housing portion 110. Accordingly, it is possible to deal with the shape of the coffee capsule T compatibly.

While the present invention has been described with respect to the specific embodiments, it will be apparent to those skilled in the art that various changes and modifications may be made without departing from the spirit and scope of the invention as defined in the following claims.

## Claims

1. A receptacle device for holding a coffee capsule, which is applied to an espresso machine having a jetting unit for forcing hot water into the coffee capsule, the receptacle device comprising:
a holder unit including:
a housing portion of which an opened upper portion is closely attached and fixed to the jetting unit such that the hot water is forced inside from the jetting unit and that is formed so as to house the coffee capsule such that an outer circumferential surface of the coffee capsule is closely attached to an inner circumferential surface thereof;
a through-hole which is formed through the bottom surface of the housing portion such that the coffee mixed through the coffee capsule from the jetting unit is discharged downward;
a first filter that is closely attached and fixed to the bottom surface of the housing portion and communicates with the through-hole of the housing portion to filter the coffee mixed with the hot water introduced from the jetting unit through the coffee capsule; and
a filter support ring that is closely attached to an upper surface of the first filter and has a boring needle formed upward so as to form a hole through a lower end surface of the coffee capsule; and
a grip unit that supports and fixes the holder unit such that the opened upper portion of the holder unit is closely attached and connected to the jetting unit of the coffee maker.

2. The receptacle device of claim 1, wherein the filter support ring has an open hole through which the coffee discharged from the coffee capsule through the hole bored by the boring needle passes.

3. The receptacle device of claim 2, wherein the holder unit further comprises a mesh-type second filter formed at the lower side of the filter support ring corresponding to the open hole and primarily filtering foreign matters mixed in the coffee.

4. The receptacle device of claim 3, wherein the housing portion has a donut-shaped downward bent portion formed at a position corresponding to a predetermined distance from the through-hole formed in the center of the housing portion, the downward bend portion has a cross-section formed in a half-moon shape, and the lower surface of the first filter is closely attached to the downward bent portion in correspondence to the shape of the downward bent portion.

5. The receptacle device of claim 4, wherein the grip unit comprises:
a body that has an opened upper portion through which the holder unit is inserted to the inside thereof;
a plurality of protrusion ribs that are formed on an outer circumferential surface of the opened upper portion of the cylindrical body so as to be attached to or detached from connection portions of the coffee maker, which are formed adjacent to the jetting unit, while the grip unit is rotated; and
a discharge hole that is formed in the center of the bottom surface of the body and induces the coffee discharged from the coffee capsule downward.

6. The receptacle device of claim 5, wherein, in order that the upper end portion of the holder unit is closely attached to the opened end portion of the grip unit, the holder unit further comprises:
a first stepped portion formed by bending an upper extended portion of the housing portion in an outer side direction; and
a second stepped portion formed by bending the edge portion of the first stepped portion in an upward direction and then bending the bent edge portion in the outer side direction.
